# EUROPEAN PATENT APPLICATION

(11) **EP 4 668 958 A1**
(43) Date of publication of application: **24.12.2025**
(21) Application number: 24756193.9
(22) Date of filing: 07.02.2024
(51) Int. Cl.: H04W 72/12

(54) **SMALL DATA TRANSMISSION METHOD AND APPARATUS, TERMINAL, AND NETWORK SIDE DEVICE**

(30) Priority: 17.02.2023 CN 202310128771
(71) Applicant: Vivo Mobile Communication Co., Ltd., Dongguan, Guangdong 523863 (CN)
(72) Inventor: CHEN, Li, Dongguan, Guangdong 523863 (CN); PAN, Xueming, Dongguan, Guangdong 523863 (CN); WANG, Lihui, Dongguan, Guangdong 523863 (CN)
(74) Representative: Conti, Marco
(86) International application number: PCT/CN2024/076511
(87) International publication number: WO 2024/169820

(57) **Abstract**

This application discloses a small data transmission method and apparatus, a terminal, and a network side device, and belongs to the field of communication technologies. The small data transmission method in an embodiment of this application includes: A terminal performs a first operation associated with small data transmission SDT. The first operation includes at least one of the following: obtaining target information, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and performing SDT on a second BWP based on a non-cell defining NCD-SSB.

## Description

### CROSS-REFERENCE TO RELATED APPLICATIONS

This application claims priority to Chinese Patent Application No. 202310128771.8, filed in China on February 17, 2023, which is incorporated herein by reference in its entirety.

### TECHNICAL FIELD

This application belongs to the field of communication technologies, and specifically relates to a small data transmission method and apparatus, a terminal, and a network side device.

### BACKGROUND

Small data transmission (small data transmission, SDT) is introduced in some communication systems. SDT may include random access (Random Access, RA)-SDT and configured grant (configured grant, CG)-SDT, and further includes subsequent (Subsequent) transmission of RA-SDT and subsequent (Subsequent) transmission of CG-SDT. RA-SDT may be SDT in a two-step random access channel (Random Access Channel, RACH) process and a four-step RACH process, and CG-SDT may be SDT on a physical uplink shared channel (Physical Uplink Shared Channel, PUSCH) scheduled by a configured grant. In some related technologies, performing SDT on a bandwidth part (Bandwidth Part, BWP) or configuring SDT on a BWP cannot be supported. Consequently, transmission performance of a terminal is poor.

### SUMMARY

Embodiments of this application provide a small data transmission method and apparatus, a terminal, and a network side device, to solve a problem of poor transmission performance of a terminal.

According to a first aspect, a small data transmission method is provided, including:
a terminal performs a first operation associated with small data transmission SDT.

The first operation includes at least one of the following:
obtaining target information, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
performing SDT on a second BWP based on a non-cell defining SSB (Non-cell defining SSB, NCD-SSB).

According to a second aspect, a small data transmission method is provided, including:
a network side device performs an operation associated with small data transmission SDT.

The operation includes at least one of the following:
sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
receiving data on which the terminal performs SDT on a second BWP based on a non-cell defining NCD-SSB.

According to a third aspect, a small data transmission apparatus is provided, including:
an execution module, configured to perform a first operation associated with small data transmission SDT.

The first operation includes at least one of the following:
obtaining target information, where the target information is used for configuring, for a terminal on a first bandwidth part BWP, at least one of the following: random access RA-SDT, subsequent transmission of RA-SDT, configured grant CG-SDT, and subsequent transmission of CG-SDT; or the target information is used for not configuring, for a terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
performing SDT on a second BWP based on a non-cell defining NCD-SSB.

According to a fourth aspect, a small data transmission apparatus is provided, including:
an execution module, configured to perform an operation associated with small data transmission SDT.

The operation includes at least one of the following:
sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
receiving data on which the terminal performs SDT on a second BWP based on a non-cell defining NCD-SSB.

According to a fifth aspect, a terminal is provided. The terminal includes a processor and a memory. The memory stores a program or instructions executable on the processor. When the program or the instructions are executed by the processor, the steps of the small data transmission method on a terminal side according to embodiments of this application are implemented.

According to a sixth aspect, a terminal is provided, including a processor and a communication interface. The communication interface is configured to perform a first operation associated with small data transmission SDT. The first operation includes at least one of the following: obtaining target information, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and performing SDT on a second BWP based on a non-cell defining NCD-SSB.

According to a seventh aspect, a network side device is provided. The network side device includes a processor and a memory. The memory stores a program or instructions executable on the processor. When the program or the instructions are executed by the processor, the steps of the small data transmission method on a network side according to embodiments of this application are implemented.

According to an eighth aspect, a network side device is provided, including a processor and a communication interface. The communication interface is configured to perform an operation associated with small data transmission SDT. The operation includes at least one of the following: sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and receiving data on which the terminal performs SDT on a second BWP based on a non-cell defining NCD-SSB.

According to a ninth aspect, a small data transmission system is provided, including a terminal and a network side device. The terminal may be configured to perform the steps of the small data transmission method on a terminal side according to embodiments of this application. The network side device may be configured to perform the steps of the small data transmission method on a network side according to embodiments of this application.

According to a tenth aspect, a readable storage medium is provided. The readable storage medium stores a program or instructions. When the program or the instructions are executed by a processor, the steps of the small data transmission method on a terminal side according to embodiments of this application are implemented, or the steps of the small data transmission method on a network side according to embodiments of this application are implemented.

According to an eleventh aspect, a chip is provided. The chip includes a processor and a communication interface. The communication interface is coupled to the processor. The processor is configured to run a program or instructions to implement the small data transmission method on a terminal side according to embodiments of this application or the small data transmission method on a network side according to embodiments of this application.

According to a twelfth aspect, a computer program/program product is provided. The computer program/program product is stored in a storage medium. The computer program/program product is executed by at least one processor to implement the steps of the small data transmission method on a terminal side according to embodiments of this application. Alternatively, the computer program/program product is executed by at least one processor to implement the steps of the small data transmission method on a network side according to embodiments of this application.

In embodiments of this application, the terminal performs the first operation associated with small data transmission SDT. The first operation includes at least one of the following: obtaining the target information, where the target information is used for configuring, for the terminal on the first BWP, at least one of the following: random access RA-SDT, subsequent transmission of RA-SDT, configured grant CG-SDT, and subsequent transmission of CG-SDT; or the target information is used for not configuring, for the terminal on the first BWP, at least one of the following: RA-SDT, subsequent transmission of RA-SDT, CG-SDT, and subsequent transmission of CG-SDT, where the first BWP is the initial BWP configured with no synchronization signal and PBCH block SSB; and performing SDT on the second BWP based on the NCD-SSB. In this way, performing SDT on the second BWP based on the NCD-SSB or configuring SDT for the terminal on the first BWP can be supported, so that transmission performance of the terminal can be improved.

### BRIEF DESCRIPTION OF THE DRAWINGS

FIG. 1 is a block diagram of a wireless communication system to which an embodiment of this application may be applied;
FIG. 2 is a flowchart of a small data transmission method according to an embodiment of this application;
FIG. 3 is a flowchart of a capability information transmission method according to an embodiment of this application;
FIG. 4 is a flowchart of another small data transmission method according to an embodiment of this application;
FIG. 5 is a flowchart of another capability information transmission method according to an embodiment of this application;
FIG. 6 is a diagram of a structure of a small data transmission apparatus according to an embodiment of this application;
FIG. 7 is a diagram of a structure of a capability information transmission apparatus according to an embodiment of this application;
FIG. 8 is a diagram of a structure of another small data transmission apparatus according to an embodiment of this application;
FIG. 9 is a diagram of a structure of another capability information transmission apparatus according to an embodiment of this application;
FIG. 10 is a diagram of a structure of a communication device according to an embodiment of this application;
FIG. 11 is a diagram of a structure of a terminal according to an embodiment of this application; and
FIG. 12 is a diagram of a structure of a network side device according to an embodiment of this application.

### DETAILED DESCRIPTION

The following clearly describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The terms "first", "second", and the like in this application are used to distinguish between similar objects instead of describing a specific order or sequence. It should be understood that the terms used in such a way are interchangeable in appropriate circumstances, so that embodiments of this application can be implemented in other orders than the order illustrated or described herein. Moreover, the objects distinguished by "first" and "second" are usually of one type, and the number of objects is not limited. For example, there may be one or more first objects. In addition, "or" in this application indicates at least one of connected objects. For example, "A or B" covers three solutions, that is, Solution 1: including A but no B; Solution 2: including B but no A; and Solution 3: including both A and B. The character "/" generally indicates an "or" relationship between associated objects.

The term "indication" in this application may be a direct indication (or in other words, an explicit indication), or may be an indirect indication (or in other words, an implicit indication). The direct indication may be understood as that a sending party clearly informs a receiving party of content such as specific information, an operation that needs to be performed, or a request result in a sent indication. The indirect indication may be understood as that according to the indication sent by the sending party, the receiving party determines the corresponding information, or performs judgment and determines, based on a judgment result, the operation that needs to be performed, the request result, or the like.

It should be noted that a technology described in embodiments of this application is not limited to a long term evolution (Long Term Evolution, LTE)/LTE-advanced (LTE-Advanced, LTE-A) system, and is also applicable to another wireless communication system, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or another system. The terms "system" and "network" in embodiments of this application are often used interchangeably, and the described technology may be applied to the above-mentioned systems and radio technologies as well as other systems and radio technologies. A new radio (New Radio, NR) system is described below as an example, and the term NR is used in most of the following descriptions. Nevertheless, the technologies may also be applied to a system other than the NR system, such as a 6th generation (6th Generation, 6G) communication system.

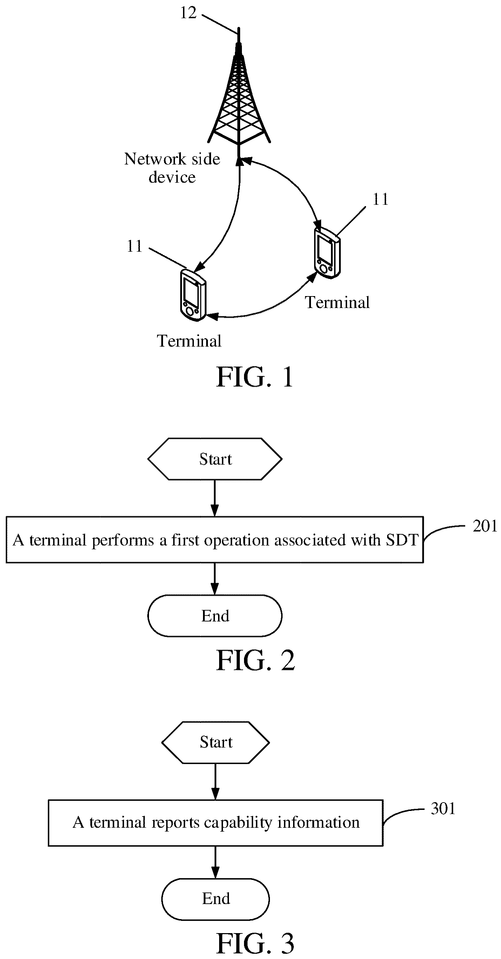

FIG. 1 is a block diagram of a wireless communication system to which an embodiment of this application may be applied. The wireless communication system includes terminals 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), an in-vehicle device (Vehicle User Equipment, VUE), a shipborne device, a pedestrian terminal (Pedestrian User Equipment, PUE), a smart home (a home device with a wireless communication function, such as a refrigerator, a television, a washing machine, or furniture), a game console, a personal computer (Personal Computer, PC), a teller machine, or a self-service machine. The wearable device includes a smartwatch, a smart band, a smart headset, smart glasses, a smart jewelry (a smart bangle, a smart bracelet, a smart ring, a smart necklace, a smart foot bangle, a smart anklet, or the like), a smart wristband, smart clothing, and the like. The in-vehicle device may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, and the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another suitable term in the field. As long as the same technical effects are achieved, the base station is not limited to a specific technical word. It should be noted that in embodiments of this application, the base station in the NR system is used merely as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in embodiments of this application, the core network device in the NR system is used merely as an example for description, and a specific type of the core network device is not limited.

In some implementations, a feature of small data transmission may be that for UE in a disconnected state, excessive signaling overheads caused by radio resource control (Radio Resource Control, RRC) state transition and an RRC connection establishment process are avoided, and small data transmission is completed through an extremely simple signaling process.

In some implementations, small data transmission may be that a data radio bearer (Data Radio Bearer, DRB) of a terminal is currently in a suspended state rather than a released state. Before sending a resume request (Resume Request) message, the terminal may first resume the DRB, and then uses RRC signaling to carry small data. In this case, like a terminal in a connected state (CONNECTED UE), the terminal may transmit data on the DRB. Therefore, state transition is avoided, and high-efficiency small data transmission is implemented with low signaling overheads.

In some implementations, because small data transmission uses DRB transmission, and access stratum (Access Stratum, AS) security is activated, necessary security protection may be performed on data during small data transmission, for example, operations such as data encryption and integrity protection. From the perspective of security, because the terminal may already move to another base station in the suspended state, in this case, a security key used by the terminal for packet retransmission needs to be updated. An update method is performing an update operation on a next key based on a parameter that is provided by a network side for the terminal when the terminal enters the suspended state and that is used for calculating the next-hop key.

In some implementations, to-be-transmitted data for small data transmission may be carried on a dedicated traffic channel (Dedicated Traffic Channel, DTCH), and is multiplexed and transmitted with an uplink RRC connection resume request (RRC Connection Resume Request) message for transmission. Similarly, if there is a downlink message returned, the downlink message may also be carried on the DTCH, and is multiplexed and transmitted with a downlink RRC connection release (RRC Connection Release) message. Uplink and downlink data is encrypted, and an encryption operation is performed through an updated next key.

In some implementations, small data may be transmitted through a message 3 (Message 3) on a physical uplink shared channel (Physical Uplink Shared Channel, PUSCH) in a four-step RACH process. Alternatively, small data may be transmitted through a message A (Message A) on a PUSCH in a two-step RACH process, or may be transmitted on a PUSCH resource scheduled by a configured grant configured in an RRC inactive (RRC inactive) state. Small data transmission in the two-step RACH process and the four-step RACH process is referred to as RACH based (RACH based) small data transmission, or may be referred to as RA-SDT. Small data transmission on a PUSCH scheduled based on a configured grant is referred to as CG based (configured grant based) small data transmission, or may be referred to as CG-SDT.

In some implementations, subsequent transmission (subsequent transmission) of RA-SDT may be cell radio network temporary identifier (Cell Radio Network Temporary Identifier, C-RNTI) scheduling transmission after contention resolution (Contention Resolution, CR).

In some implementations, transmission after receiving of a downlink acknowledgement (Downlink Acknowledgement, DL ACK) corresponding to a CG sent through a common control channel (Common Control Channel, CCCH) message is subsequent transmission of CG-SDT. In this case, subsequent transmission may use the CG, a dynamic grant (Dynamic Grant, DG), or dynamic downlink assignment (dynamic DL assignment).

In some implementations, the terminal may perform one or more of the following operations on an initial downlink BWP (initial DL BWP) of a cell: receiving of a synchronization signal and PBCH block, uplink sending (on a corresponding initial uplink BWP) in a random access process, downlink receiving, and receiving of system information and paging information. In addition, radio resource management (Radio resource management, RRM) measurement and cell reselection determining are performed based on a cell defining synchronization signal and PBCH block (cell defining SSB, CD-SSB) on the initial downlink BWP.

In some implementations, configuration of a separate initial DL BWP for a part of terminals (for example, a part of types of terminals such as a reduced capability terminal (Reduced Capability User Equipment, RedCap UE)) is supported, and the terminals may perform the foregoing sending and receiving behaviors on the separate initial BWP. The separate initial BWP and the initial downlink BWP may be fully staggered, partially overlap, or have an inclusive relationship in frequency domain. Because the terminal needs to perform operations such as downlink synchronization, measurement, and automatic gain control (Automatic Gain Control, AGC) based on an SSB, if the separate initial DL BWP includes no SSB, the terminal may need to frequently perform radio frequency retuning (RF retuning), that is, needs to frequently return from the separate initial DL BWP to a bandwidth of the initial downlink BWP to receive the SSB, resulting in an increase in power consumption of the terminal, an increase in a service interruption probability, a reduction in system performance, and the like. Therefore, including the SSB on the separate initial DL BWP can reduce power consumption of the terminal in sending and receiving on the BWP. The SSB may usually be an NCD-SSB, that is, the SSB does not include an indication of a system information receiving configuration.

In some implementations, the terminal may determine a location and a frequency of the SSB on the separate initial DL BWP based on system information on the initial downlink BWP or higher layer signaling, and the terminal is configured to perform RRM on the frequency of the SSB. The measurement may be intra-frequency (intra-frequency) measurement, and may include serving cell measurement and intra-frequency neighboring cell measurement. Whether to start neighboring cell measurement or whether to perform neighboring cell reselection on the frequency is determined based on a measurement result.

In some implementations, before performing intra-frequency measurement and inter-frequency measurement, the terminal first performs serving cell measurement. When a serving cell measurement result is higher than a threshold, the terminal may not perform intra-frequency or inter-frequency measurement. The measurement result may include reference signal received power (Reference Signal Received Power, RSRP) or reference signal received quality (Reference Signal Received Quality, RSRQ).

In some implementations, frequency locations of CD-SSBs and NCD-SSBs of two cells are the same. Alternatively, frequencies of NCD-SSBs of two cells are the same, but frequencies of CD-SSBs are different. Alternatively, frequency locations of CD-SSBs of two cells are the same, but frequency locations of NCD-SSBs are different, or there is no NCD-SSB in one cell. The two cells may be a serving cell and a neighboring cell of the terminal.

It should be noted that some of the implementations described above are examples for describing a method provided in embodiments of this application, and do not specifically limit the method provided in embodiments of this application.

The following describes in detail a small data transmission method and apparatus, a terminal, and a network side device provided in embodiments of this application through some embodiments and application scenarios thereof with reference to the accompanying drawings.

FIG. 2 is a flowchart of a small data transmission method according to an embodiment of this application. As shown in FIG. 2, the method includes the following step.

Step 201: A terminal performs a first operation associated with SDT.

The first operation includes at least one of the following:
obtaining target information, where the target information is used for configuring, for the terminal on a first BWP, at least one of the following: RA-SDT, subsequent transmission of RA-SDT, CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block (Synchronization Signal and PBCH Block, SSB); and
performing SDT on a second BWP based on a non-cell defining NCD-SSB.

The terminal may be a terminal in an idle state or an inactive state.

The target information may be information delivered by a network side and received by the terminal. The information may be configuration information or indication information.

The first BWP may be an initial BWP not configured with any SSB or configured with no specific SSB.

The initial BWP may be an initial BWP or a separate initial BWP (separate initial BWP) of the terminal.

The separate initial BWP in this embodiment of this application may be a RedCap specific initial BWP (RedCap specific initial BWP) in a protocol, including at least one of a RedCap specific initial uplink BWP (RedCap specific Initial UL BWP) or a RedCap specific initial downlink BWP (RedCap specific initial DL BWP).

The second BWP may be an initial BWP, and may be a separate initial BWP (separate initial BWP). In addition, the second BWP may be a BWP configured with an NCD-SSB.

In this embodiment of this application, with the foregoing steps, performing SDT on the second BWP based on the NCD-SSB or configuring SDT for the terminal on the first BWP can be supported, so that transmission performance of the terminal can be improved.

In some implementations, the target information may be used for implementing configuration of CG-SDT at different time on the separate initial BWP not configured with any SSB, for example, configuration of RA-SDT, subsequent transmission of RA-SDT, and subsequent transmission of CG-SDT at different time on the initial BWP not configured with any SSB. In this way, a delay and additional power consumption caused by retuning of the terminal to the initial BWP for measurement, time synchronization (Timing), and AGC during RA-SDT, subsequent transmission of RA-SDT, or subsequent transmission of CG-SDT can be avoided.

In some implementations, the NCD-SSB may be configured on the separate initial BWP on which CG-SDT is configured.

In some implementations, through radio frequency retuning (RF retuning), the terminal may perform paging monitoring on an initial BWP configured with a CD-SSB, and perform CG-SDT on a separate initial BWP configured with no CD-SSB.

In an optional implementation, no cell defining SSB (cell defining SSB, CD-SSB) and no NCD-SSB are configured on the first BWP; or
no CD-SSB is configured on the first BWP.

In this implementation, it may be implemented that at least one of RA-SDT, subsequent transmission of RA-SDT, configured grant CG-SDT, and subsequent transmission of CG-SDT is configured for the terminal on the first BWP configured with no CD-SSB and no NCD-SSB, or at least one of the following: RA-SDT, subsequent transmission of RA-SDT, CG-SDT, and subsequent transmission of CG-SDT is not configured for the terminal on the first BWP configured with no CD-SSB and no NCD-SSB. In this way, the delay and additional power consumption caused by retuning (retuning) of the terminal to the initial BWP for measurement, timing, and AGC during RA-SDT, subsequent transmission of RA-SDT, or subsequent transmission of CG-SDT can be avoided.

In this implementation, it may alternatively be implemented that at least one of RA-SDT, subsequent transmission of RA-SDT, configured grant CG-SDT, and subsequent transmission of CG-SDT is configured for the terminal on the first BWP configured with no CD-SSB, or at least one of the following: RA-SDT, subsequent transmission of RA-SDT, CG-SDT, and subsequent transmission of CG-SDT is not configured for the terminal on the first BWP configured with no CD-SSB. In this way, the delay and additional power consumption caused by retuning (retuning) of the terminal to the initial BWP for measurement, timing, and AGC during RA-SDT, subsequent transmission of RA-SDT, or subsequent transmission of CG-SDT can be avoided.

In an optional implementation, the method further includes at least one of the following:
in a case that the target information is used for configuring RA-SDT for the terminal on the first BWP, the terminal performs RA-SDT on the first BWP or a third BWP;
in a case that the target information is used for configuring CG-SDT for the terminal on the first BWP, the terminal performs CG-SDT on the first BWP or the third BWP;
in a case that the target information is used for configuring subsequent transmission of RA-SDT for the terminal on the first BWP, the terminal performs subsequent transmission of RA-SDT on the first BWP or the third BWP; and
in a case that the target information is used for configuring subsequent transmission of CG-SDT for the terminal on the first BWP, the terminal performs subsequent transmission of CG-SDT on the first BWP or the third BWP.

The third BWP is a CD-SSB associated initial BWP or an NCD-SSB associated initial BWP.

In this implementation, at least one of RA-SDT, subsequent transmission of RA-SDT, CG-SDT, and subsequent transmission of CG-SDT may be performed on the first BWP configured with no SSB (for example, not configured with any SSB), so that transmission performance of the terminal can be improved.

Alternatively, at least one of RA-SDT, subsequent transmission of RA-SDT, CG-SDT, and subsequent transmission of CG-SDT may be performed on the third BWP in a case that the first BWP is configured with no SSB (for example, not configured with any SSB), so that transmission performance of the terminal can be improved.

Optionally, the method further includes at least one the following:
in the case that the target information is used for configuring RA-SDT for the terminal on the first BWP, the terminal performs first measurement on the third BWP, and performs resource selection for RA-SDT based on a measurement result of the first measurement;
in the case that the target information is used for configuring CG-SDT for the terminal on the first BWP, the terminal performs second measurement on the third BWP, and performs resource selection for CG-SDT based on a measurement result of the second measurement;
in the case that the target information is used for configuring subsequent transmission of RA-SDT for the terminal on the first BWP, the terminal performs a second operation on the third BWP, where the second operation includes at least one of the following: measurement, automatic gain control AGC, and time synchronization, and subsequent transmission of RA-SDT is performed based on the second operation; and
in the case that the target information is used for configuring subsequent transmission of CG-SDT for the terminal on the first BWP, the terminal performs a third operation on the third BWP, where the third operation includes at least one of the following: measurement, AGC, and time synchronization, and subsequent transmission of CG-SDT is performed based on the third operation.

The foregoing measurement may include at least one of the following:
RSRP measurement, RSRQ measurement, and signal to interference plus noise ratio (Signal to Interference plus Noise Ratio, SINR) measurement.

A result of the foregoing may be used for RACH resource selection or CG PUSCH resource selection.

That the terminal performs first measurement on the third BWP, and performs RA-SDT resource selection based on the measurement result of the first measurement may be: That the terminal performs RA-SDT on the first BWP or the third BWP (for example, the CD-SSB associated initial BWP) includes: performing the first measurement based on the CD-SSB, performing resource selection for RA-SDT based on a measurement result for the CD-SSB, and then performing RA-SDT on a selected resource.

That the terminal performs second measurement on the third BWP, and performs resource selection for CG-SDT based on the measurement result of the second measurement may be: That the terminal performs CG-SDT on the first BWP or the third BWP includes: performing the second measurement on the CD-SSB or NCD-SSB associated initial BWP, performing resource selection for CG-SDT based on the measurement result of the second measurement, and then performing CG-SDT on a selected resource.

That the terminal performs the second operation on the third BWP may be: That the terminal performs subsequent transmission of RA-SDT on the first BWP or the third BWP includes: The terminal performs at least one of measurement, AGC, and time synchronization on the CD-SSB or NCD-SSB associated initial BWP, and then performs subsequent transmission of RA-SDT based on these operations.

That the terminal performs the third operation on the third BWP may be: That the terminal performs subsequent transmission of CG-SDT on the first BWP or the third BWP includes: The terminal performs at least one of measurement, AGC, and time synchronization on the CD-SSB or NCD-SSB associated initial BWP, and then performs subsequent transmission of CG-SDT based on these operations.

In the foregoing implementation, because the terminal may perform the first measurement, the second measurement, the second operation, or the third operation on the CD-SSB or NCD-SSB associated initial BWP, transmission performance of the terminal in performing SDT on the first BWP or the third BWP can be improved.

In an optional implementation, the second BWP is an initial BWP or a RedCap dedicated (or referred to as RedCap specific) initial BWP.

In this implementation, SDT may be performed on the initial BWP or the RedCap dedicated initial BWP based on the NCD-SSB, so that the transmission performance of the terminal can be improved. For example, SDT is performed on the separate initial BWP based on the NCD-SSB.

In an optional implementation, the performing SDT on the second BWP based on the NCD-SSB includes at least one of the following:
performing RA-SDT on the second BWP, where a resource for performing RA-SDT is a resource selected based on a measurement result for the NCD-SSB, timing for performing RA-SDT is timing determined based on the NCD-SSB, or AGC for performing RA-SDT is AGC determined based on the NCD-SSB;
performing subsequent transmission of RA-SDT on the second BWP, where timing for performing subsequent transmission of RA-SDT is timing determined based on the NCD-SSB, or AGC for performing subsequent transmission of RA-SDT is AGC determined based on the NCD-SSB;
performing CG-SDT on the second BWP, where timing for performing CG-SDT is timing determined based on the NCD-SSB; and
performing subsequent transmission of CG-SDT on the second BWP, where timing for performing subsequent transmission of CG-SDT is timing determined based on the NCD-SSB, or a corresponding SSB for performing subsequent transmission of CG-SDT is an SSB determined based on the NCD-SSB.

That the resource for performing RA-SDT is the resource selected based on the measurement result for the NCD-SSB, timing for performing RA-SDT is timing determined based on the NCD-SSB, or AGC for performing RA-SDT is AGC determined based on the NCD-SSB includes at least one of the following:
the resource for performing RA-SDT is the resource selected based on the measurement result for the NCD-SSB;
timing for performing RA-SDT is timing determined based on the NCD-SSB; and
AGC for performing RA-SDT is AGC determined based on the NCD-SSB.

For example, the terminal performs RACH resource selection for RA-SDT based on the measurement result for the NCD-SSB, determines timing for RA-SDT based on the NCD-SSB, and performs AGC for RA-SDT based on the NCD-SSB.

Because the resource for performing RA-SDT is the resource selected based on the measurement result for the NCD-SSB, timing for performing RA-SDT is timing determined based on the NCD-SSB, or AGC for performing RA-SDT is AGC determined based on the NCD-SSB, transmission performance in RA-SDT can be improved.

That timing for performing subsequent transmission of RA-SDT is timing determined based on the NCD-SSB, or AGC for performing subsequent transmission of RA-SDT is AGC determined based on the NCD-SSB includes at least one of the following:
timing for performing subsequent transmission of RA-SDT is timing determined based on the NCD-SSB; and
AGC for performing subsequent transmission of RA-SDT is AGC determined based on the NCD-SSB.

Because timing for performing subsequent transmission of RA-SDT is timing determined based on the NCD-SSB, or AGC for performing subsequent transmission of RA-SDT is AGC determined based on the NCD-SSB, transmission performance in subsequent transmission of RA-SDT can be improved.

In some implementations, the resource selected based on the measurement result for the NCD-SSB may be: selecting a first resource if the measurement result for the NCD-SSB is higher than a preset threshold, or selecting a second resource if the measurement result for the NCD-SSB is lower than a preset threshold. The first resource includes supplementary uplink (Supplementary Uplink, SUL), the separate initial BWP, and the like. The second resource is a resource different from the first resource.

That timing for performing subsequent transmission of CG-SDT is timing determined based on the NCD-SSB, or the corresponding SSB for performing subsequent transmission of CG-SDT is the SSB determined based on the NCD-SSB includes at least one of the following:
timing for performing subsequent transmission of CG-SDT is timing determined based on the NCD-SSB; and
the corresponding SSB for performing subsequent transmission of CG-SDT is the SSB determined based on the NCD-SSB.

Because timing for performing subsequent transmission of CG-SDT is timing determined based on the NCD-SSB, or the corresponding SSB for performing subsequent transmission of CG-SDT is the SSB determined based on the NCD-SSB, transmission performance in subsequent transmission of CG-SDT can be improved.

It should be noted that the NCD-SSB may be the NCD-SSB configured on the second BWP, or may be an NCD-SSB configured on another BWP.

In an optional implementation, a configuration of the NCD-SSB includes at least one of the following:
an NCD-SSB configuration obtained through an RRC message;
an NCD-SSB configuration used by the terminal in a connected state; and
an NCD-SSB configuration obtained through a system message.

The RRC message may include at least one of the following:
an RRC release message (RRC release message), an RRC configuration message, and an RRC reconfiguration message.

On the second BWP, the terminal may support at least one of the following:
RA-SDT, subsequent transmission of RA-SDT, CG-SDT, and subsequent transmission of CG-SDT.

In the foregoing implementation, the terminal may perform SDT on the second BWP based on the NCD-SSB configured obtained through the RRC message, the NCD-SSB used by the terminal in the connected state, or the NCD-SSB configuration obtained through the system message. Specifically, at least one of RA-SDT, subsequent transmission of RA-SDT, CG-SDT, and subsequent transmission of CG-SDT may be performed. Therefore, the transmission performance of the terminal is further improved.

An embodiment is as follows.

The terminal obtains the NCD-SSB configuration through the RRC release message, or the terminal reuses the NCD-SSB configured in the connected state. In this case, that the terminal performs SDT based on the NCD-SSB specifically includes that the terminal supports, on a first preset BWP in a target cell or a target area, at least one of the following:
1: CG-SDT;
2: subsequent transmission of CG-SDT;
3: RA-SDT; and
4: subsequent transmission of RA-SDT.

1, 2, 3, and 4 are supported, that is, all SDT may be performed based on the NCD-SSB. In this way, an application range of SDT is the widest, and a benefit of reducing the delay, the power consumption, and signaling can be achieved by transmitting small data through SDT.

1, 2, and 4 are supported, that is, CG-SDT, subsequent transmission of CG-SDT, and subsequent transmission of RA-SDT may be performed based on the NCD-SSB. In this way, use of the NCD-SSB can be limited in a RACH process of RA-SDT. This can bring a benefit that RACH is performed on the initial BWP configured with the CD-SSB, to reduce a probability of a possible paging (paging) loss and a system information (System Information, SI) message update in an SDT process.

1 and 2 are supported, that is, CG-SDT, subsequent transmission of CG-SDT, and subsequent transmission of RA-SDT may be performed based on the NCD-SSB. In this way, use of the NCD-SSB can be limited in a RACH process of RA-SDT and a subsequent transmission process of RA-SDT. This can bring a benefit that RACH is performed on the initial BWP configured with the CD-SSB, to reduce a probability of a possible paging loss and an SI message update in an SDT process.

In another embodiment, the terminal obtains the NCD-SSB configuration through the system message. In this case, that the terminal performs SDT based on the NCD-SSB specifically includes that the terminal supports, on a first preset BWP, at least one of the following:
1: CG-SDT;
2: subsequent transmission of CG-SDT;
3: RA-SDT; and
4: subsequent transmission of RA-SDT.

1, 2, 3, and 4 are supported, that is, all SDT may be performed based on the NCD-SSB. In this way, an application range of SDT is the widest, and a benefit of reducing the delay, the power consumption, and signaling can be achieved by transmitting small data through SDT.

1, 2, and 4 are supported, that is, CG-SDT, subsequent transmission of CG-SDT, and subsequent transmission of RA-SDT may be performed based on the NCD-SSB. In this way, use of the NCD-SSB can be limited in a RACH process of RA-SDT. This can bring a benefit that RACH is performed on the initial BWP configured with the CD-SSB, to reduce a probability of a possible paging (paging) loss and a system information (System Information, SI) message update in an SDT process.

1 and 2 are supported, that is, CG-SDT, subsequent transmission of CG-SDT, and subsequent transmission of RA-SDT may be performed based on the NCD-SSB. In this way, use of the NCD-SSB can be limited in a RACH process of RA-SDT and a subsequent transmission process of RA-SDT. This can bring a benefit that RACH is performed on the initial BWP configured with the CD-SSB, to reduce a probability of a possible paging loss and an SI message update in an SDT process.

In an optional implementation, the second BWP includes an NCD-SSB associated BWP in a target cell, or the second BWP includes an NCD-SSB associated BWP in a target area.

The target cell may include at least one of the following:
a cell in which a received target message is located or a cell in which a successfully demodulated target message is located, where the target message includes an NCD-SSB configuration;
a cell in which a received RRC release message is located or a cell in which a successfully demodulated RRC release message is located;
a cell in which the terminal is located before entering the idle state (idle state);
a cell in which the terminal is located before entering the inactive state (inactive state);
a cell in which the terminal is located in the idle state; and
a cell in which the terminal is located in the inactive state.

The target message may include at least one of the following:
an RRC release message, an RRC configuration message (RRC configuration message), or an RRC reconfiguration message (RRC reconfiguration message).

The cell in which the successfully demodulated target message is located may be a cell in which a message including the NCD-SSB configuration is obtained through demodulation.

The cell in which the successfully demodulated RRC release message is located may be a cell in which the RRC release message is obtained through demodulation.

In this implementation, SDT may be performed on second BWPs in a plurality of target cells, so that the transmission performance of the terminal is improved.

Optionally, the target area includes:
an area in which the target cell is located.

The area in which the target cell is located includes at least one of the following:
an access network notification area (RAN-based Notification Area, RNA) in which the target cell is located;
a public land mobile network (Public Land Mobile Network, PLMN) in which the target cell is located;
a tracking area (Tracking Area, TA) in which the target cell is located;
a paging area in which the target cell is located;
a distributed unit (Distributed Unit, DU) range in which the target cell is located; and
a central unit (Central Unit, CU) range in which the target cell is located.

In this implementation, SDT may be performed on second BWPs in a plurality of target areas, so that the transmission performance of the terminal is improved.

In an optional implementation, the method further includes:
the terminal reports capability information, where the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a RACH process on the another BWP.

That the terminal reports the capability information may be: The terminal reports the capability information to the network side.

The another BWP may include at least one of the following:
a separate initial BWP (Separate initial BWP), a BWP configured with no CD-SSB, a non-initial BWP, another inter-band BWP (another inter-band BWP), another intra-band BWP (another intra-band BWP), another inter-frequency BWP (another inter-frequency BWP), and another intra-frequency BWP (another intra-frequency BWP).

In this implementation, the capability information is reported, so that a peer end (for example, a network side device) of the terminal can determine at least one of the foregoing capabilities of the terminal, and then configure corresponding SDT for the terminal, improving the transmission performance of the terminal.

In an optional implementation, the first BWP is an initial BWP in a neighboring cell of a serving cell of the terminal.

An NCD-SSB configuration for SDT performed by the terminal on the initial BWP in the neighboring cell may be obtained through an RRC message from the serving cell of the terminal.

In this implementation, when moving to the neighboring cell, the terminal supports or does not support SDT based on the foregoing target information. For example, if a separate initial BWP in a neighboring cell does not include a CD-SSB (regardless of whether an NCD-SSB is included), the terminal may support RA-SDT after cell selection or reselection to the neighboring cell.

In an optional implementation, the second BWP is an initial BWP that is in the neighboring cell of the serving cell of the terminal and that is configured with an NCD-SSB but no CD-SSB, and the performing SDT on the second BWP based on the non-cell defining NCD-SSB includes:
the terminal performs SDT on the second BWP based on the NCD-SSB after moving from the serving cell (which may also be referred to as a current cell) to the neighboring cell.

The initial BWP may include a conventional initial BWP or a RedCap specific initial BWP.

In this implementation, after moving the neighboring cell, the terminal may perform SDT on the initial BWP configured with the NCD-SSB but no CD-SSB, so that the transmission performance of the terminal is improved.

Optionally, a configuration of the NCD-SSB of the neighboring cell is an NCD-SSB configuration configured for the neighboring cell via the serving cell of the terminal.

In some implementations, the terminal obtains the configuration of the NCD-SSB of the neighboring cell through the RRC message from the serving cell.

The RRC message may include at least one of the following:
an RRC release message, an RRC configuration message (RRC configuration message), or an RRC reconfiguration message (RRC reconfiguration message).

In this implementation, the configuration of the NCD-SSB of the neighboring cell may be obtained from the serving cell, so that the terminal performs SDT on a BWP of the neighboring cell based on the configuration. In this way, when SDT on the separate initial BWP is configured in a system message of the neighboring cell, if there is no CD-SSB and no NCD-SSB on the separate initial BWP, the terminal can also perform SDT on the neighboring cell, improving the transmission performance of the terminal. In addition, another terminal in the idle/inactive state is prevented from obtaining the NCD-SSB configuration, so that the power consumption of the terminal is reduced.

Optionally, the configuration of the NCD-SSB of the neighboring cell is the same as a configuration of a CD-SSB of the serving cell of the terminal.

The foregoing configuration may include at least one of the following:
a physical cell identifier (Physical Cell Identifier, PCI), a synchronization signal and PBCH block burst (SSB burst), transmit power, and the like.

In this implementation, because the configuration of the NCD-SSB of the neighboring cell is the same as the configuration of the CD-SSB of the serving cell of the terminal, when SDT on the separate initial BWP is configured in the system message of the neighboring cell, if there is no CD-SSB and no NCD-SSB on the separate initial BWP, the terminal can also perform SDT on the neighboring cell, improving the transmission performance of the terminal.

In an optional implementation, in a case that the terminal performs SDT on the second BWP based on the NCD-SSB, the method further includes:
the terminal obtains a paging message or a system information update indication in at least one of the following manners:
receiving an RRC message sent by the network side, where the RRC message carries the paging message or the system information update indication;
monitoring a paging location (Paging occasion, PO) of any terminal; and
monitoring the paging message on the CD-SSB associated initial BWP.

The RRC message may include at least one of the following:
an RRC release message, an RRC configuration message (RRC configuration message), or an RRC reconfiguration message (RRC reconfiguration message).

The monitoring the PO of any terminal may be monitoring a paging message of the terminal at the paging location of any terminal.

In this implementation, the terminal in the idle state or the inactive state that performs SDT may obtain the paging message or the system information update indication in a manner of obtaining the paging message or the system information update indication via a terminal in a connected state. In this way, complexity of performing SDT by the terminal can be reduced, and an additional procedure for obtaining the paging message or the system information update indication does not need to be introduced.

In this embodiment of this application, the terminal performs the first operation associated with small data transmission SDT. The first operation includes at least one of the following: obtaining the target information, where the target information is used for configuring, for the terminal on the first BWP, at least one of the following: random access RA-SDT, subsequent transmission of RA-SDT, configured grant CG-SDT, and subsequent transmission of CG-SDT; or the target information is used for not configuring, for the terminal on the first BWP, at least one of the following: RA-SDT, subsequent transmission of RA-SDT, CG-SDT, and subsequent transmission of CG-SDT, where the first BWP is the initial BWP configured with no synchronization signal and PBCH block SSB; and performing SDT on the second BWP based on the NCD-SSB. In this way, performing SDT on the second BWP based on the NCD-SSB or configuring SDT for the terminal on the first BWP can be supported, so that the transmission performance of the terminal can be improved.

FIG. 3 is a flowchart of a capability information transmission method according to an embodiment of this application. As shown in FIG. 3, the method includes the following step.

Step 301: A terminal reports capability information, where the capability information indicates at least one of the following:
supporting at least one of RA-SDT, subsequent transmission of RA-SDT, CG-SDT, and subsequent transmission of CG-SDT to be performed based on an NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a RACH process on the another BWP.

That the terminal reports the capability information may be: The terminal reports the capability information to a network side.

The another BWP may include at least one of the following:
a separate initial BWP (Separate initial BWP), a BWP configured with no CD-SSB, a non-initial BWP, another inter-band BWP (another inter-band BWP), another intra-band BWP (another intra-band BWP), another inter-frequency BWP (another inter-frequency BWP), and another intra-frequency BWP (another intra-frequency BWP).

In this embodiment, the capability information is reported, so that a peer end (for example, a network side device) of the terminal can determine at least one of the foregoing capabilities of the terminal, and then configure corresponding SDT for the terminal, improving transmission performance of the terminal.

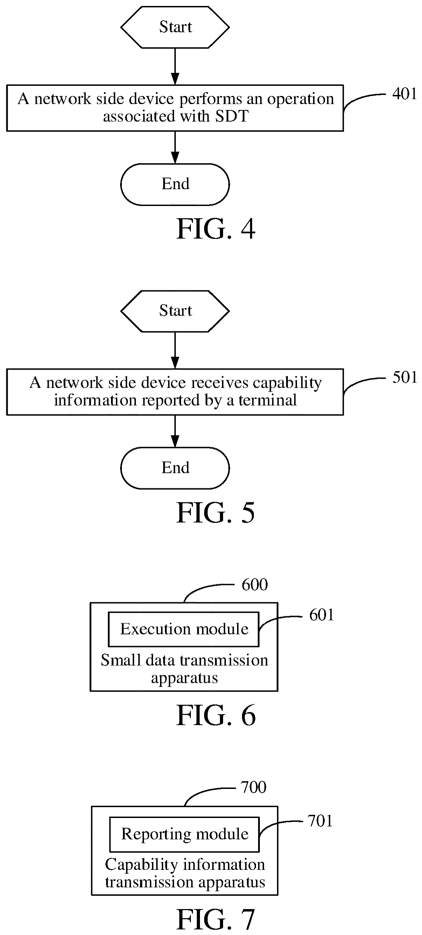

FIG. 4 is a flowchart of another small data transmission method according to an embodiment of this application. As shown in FIG. 4, the method includes the following step.

Step 401: A network side device performs an operation associated with SDT.

The operation includes at least one of the following:
sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
receiving data on which the terminal performs SDT on a second BWP based on a non-cell defining NCD-SSB.

Optionally, no cell defining CD-SSB and no NCD-SSB are configured on the first BWP; or
no cell defining CD-SSB is configured on the first BWP.

Optionally, the method further includes at least one the following:
in a case that the target information is used for configuring RA-SDT for the terminal on the first BWP, receiving data on which the terminal performs RA-SDT on the first BWP or a third BWP;
in a case that the target information is used for configuring CG-SDT for the terminal on the first BWP, receiving data on which the terminal performs CG-SDT on the first BWP or the third BWP;
in a case that the target information is used for configuring subsequent transmission of RA-SDT for the terminal on the first BWP, receiving data on which the terminal performs subsequent transmission of RA-SDT on the first BWP or the third BWP; and
in a case that the target information is used for configuring subsequent transmission of CG-SDT for the terminal on the first BWP, receiving data on which the terminal performs subsequent transmission of CG-SDT on the first BWP or the third BWP.

The third BWP is a CD-SSB associated initial BWP or an NCD-SSB associated initial BWP.

Optionally, the second BWP is an initial BWP or a reduced capability RedCap dedicated initial BWP.

Optionally, a configuration of the NCD-SSB includes at least one of the following:
an NCD-SSB configuration delivered through a radio resource control RRC message;
an NCD-SSB configuration used by the terminal in a connected state; and
an NCD-SSB configuration delivered through a system message.

Optionally, the RRC message includes at least one of the following:
an RRC release message, an RRC configuration message, and an RRC reconfiguration message.

Optionally, the second BWP includes an NCD-SSB associated BWP in a target cell, or the second BWP includes an NCD-SSB associated BWP in a target area.

Optionally, the target cell includes at least one of the following:
a cell in which a target message received by the terminal is located or a cell in which a target message successfully demodulated by the terminal is located, where the target message includes an NCD-SSB configuration;
a cell in which an RRC release message received by the terminal is located or a cell in which an RRC release message successfully demodulated by the terminal is located;
a cell in which the terminal is located before the terminal enters an idle state;
a cell in which the terminal is located before the terminal enters an inactive state;
a cell in which the terminal is located in the idle state; and
a cell in which the terminal is located in the inactive state.

Optionally, the target area includes:
an area in which the target cell is located.

Optionally, the area in which the target cell is located includes at least one of the following:
an access network notification area RNA in which the target cell is located;
a public land mobile network PLMN in which the target cell is located;
a tracking area TA in which the target cell is located;
a paging area in which the target cell is located;
a distributed unit DU range in which the target cell is located; and
a central unit CU range in which the target cell is located.

Optionally, the method further includes:
the network side device receives capability information reported by the terminal, where the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

It should be noted that for specific implementations of this embodiment as an implementation of the network side device corresponding to the embodiment shown in FIG. 2, refer to the relevant descriptions about the embodiment shown in FIG. 2. To avoid repetition, details are not described in this embodiment again.

FIG. 5 is a flowchart of another capability information transmission method according to an embodiment of this application. As shown in FIG. 5, the method includes the following step.

Step 501: A network side device receives capability information reported by a terminal, where the capability information indicates at least one of the following:
supporting at least one of RA-SDT, subsequent transmission of RA-SDT, CG-SDT, and subsequent transmission of CG-SDT to be performed based on an NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

It should be noted that for specific implementations of this embodiment as an implementation of the network side device corresponding to the embodiment shown in FIG. 3, refer to the relevant descriptions about the embodiment shown in FIG. 3. To avoid repetition, details are not described in this embodiment again.

The following describes the method provided in embodiments of this application by using a plurality of embodiments as examples.

### Embodiment 1

In this embodiment, how to configure or not configure SDT in different cases is mainly described. Details are as follows.

On a first BWP (or referred to as a first preset BWP) not configured with any SSB (including a CD-SSB and an NCD-SSB), at least one of the following is not configured for the terminal:
1: RA-SDT;
2: subsequent transmission of RA-SDT;
3: CG-SDT; and
4: subsequent transmission of CG-SDT.

Not configuring 1, 2, and 4 for the terminal together brings a benefit of avoiding a delay and additional power consumption caused by retuning (retuning) of the terminal to an initial BWP for measurement, timing, and AGC during RA-SDT, subsequent transmission of RA-SDT, or subsequent transmission of CG-SDT.

Alternatively, on a first BWP (or referred to as a first preset BWP) not configured with any SSB (including a CD-SSB and an NCD-SSB), at least one of the following is configured for the terminal/at least one needs to be supported:
1: RA-SDT;
2: subsequent transmission of RA-SDT;
3: CG-SDT; and
4: subsequent transmission of CG-SDT.

Specifically, when performing RA-SDT on the first BWP, the terminal performs, on a CD-SSB associated initial BWP, at least one of the following operations:
RSRP measurement, RSRQ measurement, and SINR measurement, specifically measurement for RACH resource selection.

Specifically, when performing CG-SDT on the first BWP, the terminal performs, on the CD-SSB associated initial BWP, at least one of the following operations:
RSRP measurement, RSRQ measurement, and SINR measurement, specifically measurement for CG PUSCH resource selection.

Specifically, when performing subsequent transmission of RA-SDT or subsequent transmission of CG-SDT on the first BWP, the terminal performs, on the CD-SSB associated initial BWP, at least one of the following operations:
measurement, timing, and AGC.

### Embodiment 2

In this embodiment, how to support SDT through an NCD-SSB is mainly described. Details are as follows.

The terminal performs SDT on a second BWP (or referred to as a first preset BWP) based on the NCD-SSB, specifically including at least one of the following:
1: for RA-SDT, performing RACH resource selection based on a measurement result for the NCD-SSB, specifically: selecting a first resource if the measurement result for the NCD-SSB is higher than a preset threshold, or selecting a second resource if the measurement result for the NCD-SSB is lower than a preset threshold, where the first resource includes SUL, a separate initial BWP, and the like;
2: for RA-SDT or subsequent transmission of RA-SDT, obtaining timing and AGC based on the NCD-SSB;
3: for CG-SDT, obtaining timing based on the NCD-SSB; and
4: for subsequent transmission of CG-SDT, reselecting an SSB based on the NCD-SSB, and obtaining timing based on the NCD-SSB.

### Solution 1

The terminal obtains an NCD-SSB configuration through an RRC release message, or the terminal reuses an NCD-SSB configured in a connected state. In this case, that the terminal performs SDT based on the NCD-SSB specifically includes that the terminal supports, on a first preset BWP in a target cell or a target area, at least one of the following:
1: CG-SDT;
2: subsequent transmission of CG-SDT;
3: RA-SDT; and
4: subsequent transmission of RA-SDT.

Embodiment 2.1: 1, 2, 3, and 4 are supported, that is, all SDT may be performed based on the NCD-SSB. In this way, an application range of SDT is the widest, and a benefit of reducing a delay, power consumption, and signaling can be achieved by transmitting small data through SDT.

Embodiment 2.2: 1, 2, and 4 are supported, that is, CG-SDT, subsequent transmission of CG-SDT, and subsequent transmission of RA-SDT may be performed based on the NCD-SSB. In this way, use of the NCD-SSB can be avoided in a RACH process of RA-SDT. This can bring a benefit that RACH is performed on an initial BWP configured with a CD-SSB, to reduce a probability of a possible paging loss and an SI message update in the SDT process.

Embodiment 2.3: 1 and 2 are supported, that is, CG-SDT and subsequent transmission of CG-SDT may be performed based on the NCD-SSB. In this way, use of the NCD-SSB can be avoided in a RACH process of RA-SDT and a subsequent transmission process of RA-SDT. This can bring a benefit that RACH is performed on an initial BWP configured with a CD-SSB, to reduce a probability of a possible paging loss and an SI message update in the SDT process.

The second BWP is a BWP configured with the NCD-SSB, for example, a separate initial BWP.

The target cell includes at least one of the following:
1: a cell in which a message (RRC release, RRC configuration, or RRC reconfiguration) including an NCD-SSB configuration is received or obtained through demodulation;
2: a cell in which an RRC release message is received or obtained through demodulation;
3: a cell in which the terminal is located before entering an idle/inactive state; and
4: a cell in which the terminal is located in the idle/inactive state.

The target area is an area in which the target cell is located. The area includes at least one of the following: an RNA, a PLMN, a TA, a paging area (area), another preset area including the target cell, a DU range, and a CU range.

### Solution 2

The terminal obtains an NCD-SSB configuration through a system message. In this case, that the terminal performs SDT based on the NCD-SSB specifically includes that the terminal supports, on the second BWP, at least one of the following:
1: CG-SDT;
2: subsequent transmission of CG-SDT;
3: RA-SDT; and
4: subsequent transmission of RA-SDT.

Similar to the foregoing Embodiments 2.1, 2.2, and 2.3, details are not described herein again.

### Embodiment 3

Terminal capabilities are mainly described in this embodiment. Details are as follows.

The terminal reports capability information, where the capability information indicates at least one of the following:
1: supporting SDT to be performed based on an NCD-SSB;
2: supporting SDT on a separate initial BWP including no CD-SSB;
3: supporting SDT on a separate initial BWP not including any SSB;
4: a delay of switching between another BWP and an initial BWP being less than a preset value;
5: a delay of retuning from the another BWP back to the initial BWP being less than the preset value;
6: whether the terminal needs to return to the initial BWP to perform a first operation in an SDT process on the another BWP; and
7: whether the terminal needs to return to the initial BWP to perform the first operation in a RACH process on the another BWP.

The foregoing SDT includes at least one of the following:
1: RA-SDT;
2: RA-SDT subsequent transmission;
3: CG-SDT; and
4: CG-SDT subsequent transmission.

The another BWP includes at least one of the following:
1: a separate initial BWP;
2: a BWP including no CD-SSB;
3: another non-initial BWP;
4: another inter-band BWP;
5: another intra-band BWP;
6: another inter-frequency BWP; and
7: another intra-frequency BWP.

The first operation includes at least one of the following:
1: measurement;
2: timing; and
3: AGC.

Further, the network side may configure SDT for the terminal based on the capability information reported by the terminal.

### Embodiment 4

RA-SDT of a neighboring cell is mainly described in this embodiment. Details may be as follows.

4.1: If a separate initial BWP in the neighboring cell includes a CD-SSB, the terminal may support RA-SDT after cell selection or reselection to the neighboring cell. In this way, RA-SDT may be performed on the separate initial BWP in the neighboring cell.

4.2: If a separate initial BWP in the neighboring cell does not include a CD-SSB (regardless of whether an NCD-SSB is included), the terminal may support RA-SDT after cell selection or reselection to the neighboring cell. In this way, RA-SDT may be performed on the separate initial BWP in the neighboring cell.

4.3: If a separate initial BWP in the neighboring cell does not include a CD-SSB but includes an NCD-SSB, the terminal may perform RA-SDT based on the NCD-SSB after cell selection or reselection to the neighboring cell. This has a benefit that when RA-SDT on the separate initial BWP is configured in a system message of the neighboring cell, in a case that there is no CD-SSB and no NCD-SSB on the separate initial BWP, it can be avoided that the terminal can perform SDT on the separate initial BWP in the neighboring cell. In this solution, SDT may be performed by configuring the NCD-SSB for the neighboring cell via a current cell. In addition, other UE in an idle/inactive state is prevented from obtaining an NCD-SSB configuration.

For 4.3, further, if a configuration of the NCD-SSB of the neighboring cell is the same as a configuration of a CD-SSB of the current cell, for example, physical cell identifiers (Physical Cell Identifiers, PCIs) are the same, SSB bursts (SSB bursts) are the same, or transmit power is the same, the terminal may perform RA-SDT based on the NCD-SSB after cell selection or reselection to the neighboring cell.

For 4.3, further, the terminal obtains the NCD-SSB configuration of the neighboring cell from a first message of the current cell, where the first message includes at least one of the following:
an RRC release message, an RRC configuration message, and an RRC reconfiguration message.

In this embodiment of this application, SDT is configured in different cases, SDT is performed based on the NCD-SSB, and the terminal performs SDT after cell selection and reselection, so that a probability of retuning (retuning) of the terminal between different BWPs, and additional power consumption and an additional service delay of the terminal caused by retuning can be reduced.

An execution subject of the small data transmission method provided in embodiments of this application may be a small data transmission apparatus. In embodiments of the disclosure, an example in which the small data transmission apparatus performs the small data transmission method is used to describe the small data transmission apparatus provided in embodiments of this application.

FIG. 6 is a diagram of a structure of a small data transmission apparatus according to an embodiment of this application. As shown in FIG. 6, the small data transmission apparatus 600 includes:
an execution module 601, configured to perform a first operation associated with small data transmission SDT.

The first operation includes at least one of the following:
obtaining target information, where the target information is used for configuring, for a terminal on a first bandwidth part BWP, at least one of the following: random access RA-SDT, subsequent transmission of RA-SDT, configured grant CG-SDT, and subsequent transmission of CG-SDT; or the target information is used for not configuring, for a terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
performing SDT on a second BWP based on a non-cell defining NCD-SSB.

Optionally, no cell defining CD-SSB and no NCD-SSB are configured on the first BWP; or
no cell defining CD-SSB is configured on the first BWP.

Optionally, the apparatus further includes at least one the following:
a first transmission module, configured to: in a case that the target information is used for configuring RA-SDT for the terminal on the first BWP, perform, by the terminal, RA-SDT on the first BWP or a third BWP;
a second transmission module, configured to: in a case that the target information is used for configuring CG-SDT for the terminal on the first BWP, perform, by the terminal, CG-SDT on the first BWP or the third BWP;
a third transmission module, configured to: in a case that the target information is used for configuring subsequent transmission of RA-SDT for the terminal on the first BWP, perform, by the terminal, subsequent transmission of RA-SDT on the first BWP or the third BWP; and
a fourth transmission module, configured to: in a case that the target information is used for configuring subsequent transmission of CG-SDT for the terminal on the first BWP, perform, by the terminal, subsequent transmission of CG-SDT on the first BWP or the third BWP.

The third BWP is a CD-SSB associated initial BWP or an NCD-SSB associated initial BWP.

Optionally, the apparatus further includes at least one the following:
a first measurement module, configured to: in the case that the target information is used for configuring RA-SDT for the terminal on the first BWP, perform, by the terminal, first measurement on the third initial BWP, and perform resource selection for RA-SDT based on a measurement result of the first measurement;
a second measurement module, configured to: in the case that the target information is used for configuring CG-SDT for the terminal on the first BWP, perform, by the terminal, second measurement on the third BWP, and perform resource selection for CG-SDT based on a measurement result of the second measurement;
a first operation module, configured to: in the case that the target information is used for configuring subsequent transmission of RA-SDT for the terminal on the first BWP, perform, by the terminal, a second operation on the third BWP, where the second operation includes at least one of the following: measurement, automatic gain control AGC, and time synchronization, and subsequent transmission of RA-SDT is performed based on the second operation; and
a second operation module, configured to: in the case that the target information is used for configuring subsequent transmission of CG-SDT for the terminal on the first BWP, perform, by the terminal, a third operation on the third BWP, where the third operation includes at least one of the following: measurement, AGC, and time synchronization, and subsequent transmission of CG-SDT is performed based on the third operation.

Optionally, the second BWP is an initial BWP or a reduced capability RedCap dedicated initial BWP.

Optionally, the performing SDT on the second BWP based on the NCD-SSB includes:
performing RA-SDT on the second BWP, where a resource for performing RA-SDT is a resource selected based on a measurement result for the NCD-SSB, timing for performing RA-SDT is timing determined based on the NCD-SSB, or AGC for performing RA-SDT is AGC determined based on the NCD-SSB;
performing subsequent transmission of RA-SDT on the second BWP, where timing for performing subsequent transmission of RA-SDT is timing determined based on the NCD-SSB, or AGC for performing subsequent transmission of RA-SDT is AGC determined based on the NCD-SSB;
performing CG-SDT on the second BWP, where timing for performing CG-SDT is timing determined based on the NCD-SSB; and
performing subsequent transmission of CG-SDT on the second BWP, where timing for performing subsequent transmission of CG-SDT is timing determined based on the NCD-SSB, or a corresponding SSB for performing subsequent transmission of CG-SDT is an SSB determined based on the NCD-SSB.

Optionally, a configuration of the NCD-SSB includes at least one of the following:
an NCD-SSB configuration obtained through a radio resource control RRC message;
an NCD-SSB configuration used by the terminal in a connected state; and
an NCD-SSB configuration obtained through a system message.

Optionally, the RRC message includes at least one of the following:
an RRC release message, an RRC configuration message, and an RRC reconfiguration message.

Optionally, the second BWP includes an NCD-SSB associated BWP in a target cell, or the second BWP includes an NCD-SSB associated BWP in a target area.

Optionally, the target cell includes at least one of the following:
a cell in which a received target message is located or a cell in which a successfully demodulated target message is located, where the target message includes an NCD-SSB configuration;
a cell in which a received RRC release message is located or a cell in which a successfully demodulated RRC release message is located;
a cell in which the terminal is located before entering an idle state;
a cell in which the terminal is located before entering an inactive state;
a cell in which the terminal is located in the idle state; and
a cell in which the terminal is located in the inactive state.

Optionally, the target area includes:
an area in which the target cell is located.

Optionally, the area in which the target cell is located includes at least one of the following:
an access network notification area RNA in which the target cell is located;
a public land mobile network PLMN in which the target cell is located;
a tracking area TA in which the target cell is located;
a paging area in which the target cell is located;
a distributed unit DU range in which the target cell is located; and
a central unit CU range in which the target cell is located.

Optionally, on the second BWP, the terminal supports at least one of the following:
RA-SDT, subsequent transmission of RA-SDT, CG-SDT, and subsequent transmission of CG-SDT.

Optionally, the apparatus further includes:
a reporting module, configured to report capability information, where the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

Optionally, the first BWP is an initial BWP in a neighboring cell of a serving cell of the terminal.

Optionally, the second BWP is an initial BWP that is in the neighboring cell of the serving cell of the terminal and that is configured with an NCD-SSB but no CD-SSB, and the performing SDT on the second BWP based on the non-cell defining NCD-SSB includes:
the terminal performs SDT on the second BWP based on the NCD-SSB after moving from the serving cell to the neighboring cell.

Optionally, a configuration of the NCD-SSB of the neighboring cell is an NCD-SSB configuration configured for the neighboring cell via the serving cell of the terminal.

Optionally, the terminal obtains the configuration of the NCD-SSB of the neighboring cell through an RRC message from the serving cell.

Optionally, the configuration of the NCD-SSB of the neighboring cell is the same as a configuration of a CD-SSB of the serving cell of the terminal.

Optionally, in a case that the terminal performs SDT on the second BWP based on the NCD-SSB, the apparatus further includes:
the terminal obtains a paging message or a system information update indication in at least one of the following manners:
receiving an RRC message sent by a network side, where the RRC message carries the paging message or the system information update indication;
monitoring a PO of any terminal; and
monitoring the paging message on the CD-SSB associated initial BWP.

The foregoing small data transmission apparatus can improve transmission performance of the terminal.

The small data transmission apparatus in this embodiment of this application may be an electronic device, for example, an electronic device having an operating system, or a component in an electronic device, such as an integrated circuit or a chip. The electronic device may be a terminal, or may be another device other than a terminal. For example, the terminal may include but is not limited to the types of the terminal 11 listed above, and the another device may be a server, a network attached storage (Network Attached Storage, NAS), or the like, which are not specifically limited in this embodiment of this application.

The small data transmission apparatus provided in this embodiment of this application can implement processes implemented in the method embodiment in FIG. 2, and achieve same technical effects. To avoid repetition, details are not described herein again.

FIG. 7 is a diagram of a structure of a capability information transmission apparatus according to an embodiment of this application. As shown in FIG. 7, the capability information transmission apparatus 700 includes:
a reporting module 701, configured to report capability information, where the capability information indicates at least one of the following:
supporting at least one of RA-SDT, subsequent transmission of RA-SDT, CG-SDT, and subsequent transmission of CG-SDT to be performed based on an NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a RACH process on the another BWP.

Optionally, the another BWP may include at least one of the following:
a separate initial BWP (Separate initial BWP), a BWP configured with no CD-SSB, a non-initial BWP, another inter-band BWP (another inter-band BWP), another intra-band BWP (another intra-band BWP), another inter-frequency BWP (another inter-frequency BWP), and another intra-frequency BWP (another intra-frequency BWP).

The foregoing capability information transmission apparatus can improve transmission performance of a terminal.

The capability information transmission apparatus in this embodiment of this application may be an electronic device, for example, an electronic device having an operating system, or a component in an electronic device, such as an integrated circuit or a chip. The electronic device may be a terminal, or may be another device other than a terminal. For example, the terminal may include but is not limited to the types of the terminal 11 listed above, and the another device may be a server, a network attached storage (Network Attached Storage, NAS), or the like, which are not specifically limited in this embodiment of this application.

The capability information transmission apparatus provided in this embodiment of this application can implement processes implemented in the method embodiment in FIG. 3, and achieve same technical effects. To avoid repetition, details are not described herein again.

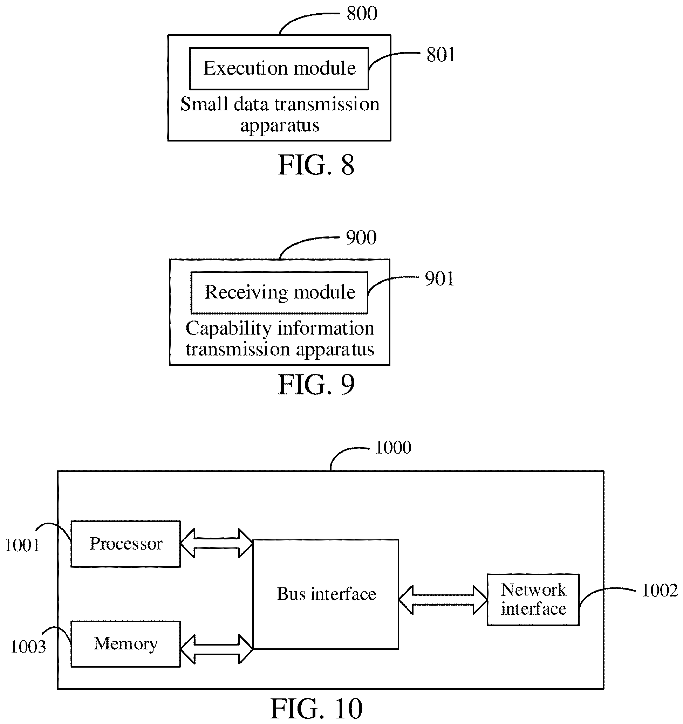

FIG. 8 is a diagram of a structure of a small data transmission apparatus according to an embodiment of this application. As shown in FIG. 8, the small data transmission apparatus 800 includes:
an execution module 801, configured to perform an operation associated with SDT.

The operation includes at least one of the following:
sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
receiving data on which the terminal performs SDT on a second BWP based on a non-cell defining NCD-SSB.

Optionally, no cell defining CD-SSB and no NCD-SSB are configured on the first BWP; or
no cell defining CD-SSB is configured on the first BWP.

Optionally, the apparatus further includes at least one the following:
a first receiving module, configured to: in a case that the target information is used for configuring RA-SDT for the terminal on the first BWP, receive data on which the terminal performs RA-SDT on the first BWP or a third BWP;
a second receiving module, configured to: in a case that the target information is used for configuring CG-SDT for the terminal on the first BWP, receive data on which the terminal performs CG-SDT on the first BWP or the third BWP;
a third receiving module, configured to: in a case that the target information is used for configuring subsequent transmission of RA-SDT for the terminal on the first BWP, receive data on which the terminal performs subsequent transmission of RA-SDT on the first BWP or the third BWP; and
a fourth receiving module, configured to: in a case that the target information is used for configuring subsequent transmission of CG-SDT for the terminal on the first BWP, receive data on which the terminal performs subsequent transmission of CG-SDT on the first BWP or the third BWP.

The third BWP is a CD-SSB associated initial BWP or an NCD-SSB associated initial BWP.

Optionally, the second BWP is an initial BWP or a reduced capability RedCap dedicated initial BWP.

Optionally, a configuration of the NCD-SSB includes at least one of the following:
an NCD-SSB configuration delivered through a radio resource control RRC message;
an NCD-SSB configuration used by the terminal in a connected state; and
an NCD-SSB configuration delivered through a system message.

Optionally, the RRC message includes at least one of the following:
an RRC release message, an RRC configuration message, and an RRC reconfiguration message.

Optionally, the second BWP includes an NCD-SSB associated BWP in a target cell, or the second BWP includes an NCD-SSB associated BWP in a target area.

Optionally, the target cell includes at least one of the following:
a cell in which a target message received by the terminal is located or a cell in which a target message successfully demodulated by the terminal is located, where the target message includes an NCD-SSB configuration;
a cell in which an RRC release message received by the terminal is located or a cell in which an RRC release message successfully demodulated by the terminal is located;
a cell in which the terminal is located before the terminal enters an idle state;
a cell in which the terminal is located before the terminal enters an inactive state;
a cell in which the terminal is located in the idle state; and
a cell in which the terminal is located in the inactive state.

Optionally, the target area includes:
an area in which the target cell is located.

Optionally, the area in which the target cell is located includes at least one of the following:
an access network notification area RNA in which the target cell is located;
a public land mobile network PLMN in which the target cell is located;
a tracking area TA in which the target cell is located;
a paging area in which the target cell is located;
a distributed unit DU range in which the target cell is located; and
a central unit CU range in which the target cell is located.

Optionally, the apparatus further includes:
a fifth receiving module, configured to receive capability information reported by the terminal, where the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

The foregoing small data transmission apparatus can improve transmission performance of the terminal.

The small data transmission apparatus in this embodiment of this application may be an electronic device, for example, an electronic device having an operating system, or a component in an electronic device, such as an integrated circuit or a chip. The electronic device may be a terminal or a network side device.

The small data transmission apparatus provided in this embodiment of this application can implement processes implemented in the method embodiment shown in FIG. 4, and achieve same technical effects. To avoid repetition, details are not described herein again.

FIG. 9 is a diagram of a structure of another capability information transmission apparatus according to an embodiment of this application. As shown in FIG. 9, the capability information transmission apparatus 900 includes:
a receiving module 901, configured to receive capability information reported by a terminal, where the capability information indicates at least one of the following:
supporting at least one of RA-SDT, subsequent transmission of RA-SDT, CG-SDT, and subsequent transmission of CG-SDT to be performed based on an NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

The foregoing capability information transmission apparatus can improve transmission performance of the terminal.

The capability information transmission apparatus in this embodiment of this application may be an electronic device, for example, an electronic device having an operating system, or a component in an electronic device, such as an integrated circuit or a chip. The electronic device may be a terminal or a network side device.

The capability information transmission apparatus provided in this embodiment of this application can implement processes implemented in the method embodiment shown in FIG. 5, and achieve same technical effects. To avoid repetition, details are not described herein again.

As shown in FIG. 10, an embodiment of this application further provides a communication device 1000, including a processor 1001 and a memory 1002. The memory 1002 stores a program or instructions executable on the processor 1001. For example, when the communication device 1000 is a terminal, and the program or the instructions are executed by the processor 1001, the steps in the foregoing small data transmission method embodiment or capability information transmission method embodiment are implemented, with same technical effects achieved. When the communication device 1000 is a network side device, and the program or the instructions are executed by the processor 1001, the steps in the foregoing small data transmission method embodiment or capability information transmission method embodiment are implemented, with same technical effects achieved. To avoid repetition, details are not described herein again.

An embodiment of this application further provides a terminal, including a processor and a communication interface. The communication interface is coupled to the processor. The processor is configured to run a program or instructions, to implement the steps in the method embodiment shown in FIG. 2 or 3. This embodiment corresponds to the foregoing method embodiment, and all the implementation processes and implementations in the method embodiment are applicable to the terminal embodiment, with same technical effects achieved.

An embodiment of this application further provides a terminal, including a processor and a communication interface. The communication interface is configured to perform a first operation associated with small data transmission SDT. The first operation includes at least one of the following: obtaining target information, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and performing SDT on a second BWP based on a non-cell defining NCD-SSB. This embodiment corresponds to the foregoing method embodiment, and all the implementation processes and implementations in the method embodiment are applicable to the terminal embodiment, with same technical effects achieved.

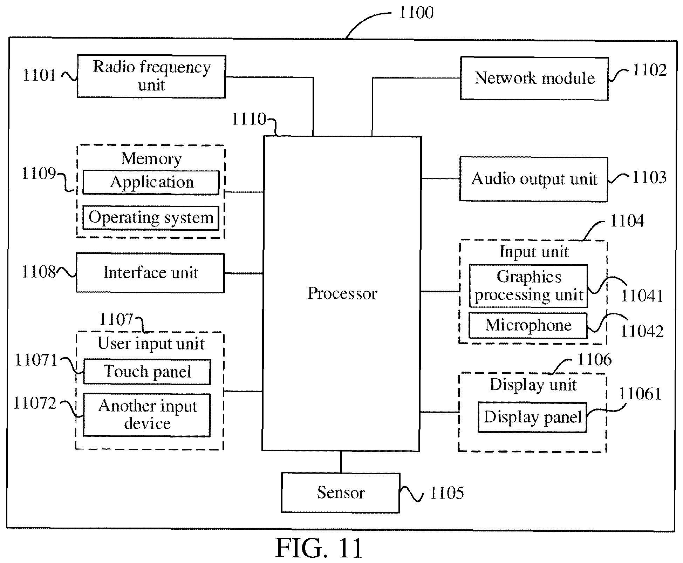

Specifically, FIG. 11 is a diagram of a hardware structure of a terminal for implementing an embodiment of this application.

The terminal 1100 includes but is not limited to at least a part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

It can be understood by a person skilled in the art that the terminal 1100 may further include a power supply (for example, a battery) supplying power to the components. The power supply may be logically connected to the processor 1110 via a power management system, so that functions such as charge and discharge management and power consumption management are implemented via the power management system. The structure of the terminal shown in FIG. 11 does not constitute any limitation on the terminal, and the terminal may include more or fewer components than shown in the diagram, or combine some of the components, or have different arrangements of the components. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a function button (for example, a volume control button or a power on/off button), a trackball, a mouse, and a joystick. Details are not described herein.

In this embodiment of this application, after receiving downlink data from a network side device, the radio frequency unit 1101 may transmit the data to the processor 1110 for processing. In addition, the radio frequency unit 1101 may send uplink data to the network side device. Generally, the radio frequency unit 1101 includes but is not limited to an antenna, an amplifier, a transceiver, a coupler, a low noise amplifier, and a duplexer.

The memory 1109 may be configured to store a software program or instructions and various data. The memory 1109 may mainly include a first storage area storing the program or the instructions and a data storage area storing the data. The first storage area may store an operating system, an application or instructions required for at least one function (for example, a sound play function and an image play function), and the like. In addition, the memory 1109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to the operating system, a user interface, an application, and the like. The modem processor mainly processes a wireless communication signal, and is, for example, a baseband processor. It may be understood that the modem processor may alternatively not be integrated into the processor 1110.

In an embodiment, the radio frequency unit 1101 is configured to perform a first operation associated with small data transmission SDT.

The first operation includes at least one of the following:
obtaining target information, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
performing SDT on a second BWP based on a non-cell defining NCD-SSB.

Optionally, no cell defining CD-SSB and no NCD-SSB are configured on the first BWP; or
no cell defining CD-SSB is configured on the first BWP.

Optionally, the radio frequency unit 1101 is further configured to perform at least one of the following:
in a case that the target information is used for configuring RA-SDT for the terminal on the first BWP, performing RA-SDT on the first BWP or a third BWP;
in a case that the target information is used for configuring CG-SDT for the terminal on the first BWP, performing CG-SDT on the first BWP or the third BWP;
in a case that the target information is used for configuring subsequent transmission of RA-SDT for the terminal on the first BWP, performing subsequent transmission of RA-SDT on the first BWP or the third BWP; and
in a case that the target information is used for configuring subsequent transmission of CG-SDT for the terminal on the first BWP, performing subsequent transmission of CG-SDT on the first BWP or the third BWP.

The third BWP is a CD-SSB associated initial BWP or an NCD-SSB associated initial BWP.

Optionally, the radio frequency unit 1101 is further configured to perform at least one of the following:
in the case that the target information is used for configuring RA-SDT for the terminal on the first BWP, performing first measurement on the third initial BWP, and performing resource selection for RA-SDT based on a measurement result of the first measurement;
in the case that the target information is used for configuring CG-SDT for the terminal on the first BWP, performing second measurement on the third BWP, and performing resource selection for CG-SDT based on a measurement result of the second measurement;
in the case that the target information is used for configuring subsequent transmission of RA-SDT for the terminal on the first BWP, performing a second operation on the third BWP, where the second operation includes at least one of the following: measurement, automatic gain control AGC, and time synchronization, and subsequent transmission of RA-SDT is performed based on the second operation; and
in the case that the target information is used for configuring subsequent transmission of CG-SDT for the terminal on the first BWP, performing a third operation on the third BWP, where the third operation includes at least one of the following: measurement, AGC, and time synchronization, and subsequent transmission of CG-SDT is performed based on the third operation.

Optionally, the second BWP is an initial BWP or a reduced capability RedCap dedicated initial BWP.

Optionally, the performing SDT on the second BWP based on the NCD-SSB includes:
performing RA-SDT on the second BWP, where a resource for performing RA-SDT is a resource selected based on a measurement result for the NCD-SSB, timing for performing RA-SDT is timing determined based on the NCD-SSB, or AGC for performing RA-SDT is AGC determined based on the NCD-SSB;
performing subsequent transmission of RA-SDT on the second BWP, where timing for performing subsequent transmission of RA-SDT is timing determined based on the NCD-SSB, or AGC for performing subsequent transmission of RA-SDT is AGC determined based on the NCD-SSB;
performing CG-SDT on the second BWP, where timing for performing CG-SDT is timing determined based on the NCD-SSB; and
performing subsequent transmission of CG-SDT on the second BWP, where timing for performing subsequent transmission of CG-SDT is timing determined based on the NCD-SSB, or a corresponding SSB for performing subsequent transmission of CG-SDT is an SSB determined based on the NCD-SSB.

Optionally, a configuration of the NCD-SSB includes at least one of the following:
an NCD-SSB configuration obtained through a radio resource control RRC message;
an NCD-SSB configuration used by the terminal in a connected state; and
an NCD-SSB configuration obtained through a system message.

Optionally, the RRC message includes at least one of the following:
an RRC release message, an RRC configuration message, and an RRC reconfiguration message.

Optionally, the second BWP includes an NCD-SSB associated BWP in a target cell, or the second BWP includes an NCD-SSB associated BWP in a target area.

Optionally, the target cell includes at least one of the following:
a cell in which a received target message is located or a cell in which a successfully demodulated target message is located, where the target message includes an NCD-SSB configuration;
a cell in which a received RRC release message is located or a cell in which a successfully demodulated RRC release message is located;
a cell in which the terminal is located before entering an idle state;
a cell in which the terminal is located before entering an inactive state;
a cell in which the terminal is located in the idle state; and
a cell in which the terminal is located in the inactive state.

Optionally, the target area includes:
an area in which the target cell is located.

Optionally, the area in which the target cell is located includes at least one of the following:
an access network notification area RNA in which the target cell is located;
a public land mobile network PLMN in which the target cell is located;
a tracking area TA in which the target cell is located;
a paging area in which the target cell is located;
a distributed unit DU range in which the target cell is located; and
a central unit CU range in which the target cell is located.

Optionally, on the second BWP, the terminal supports at least one of the following:

RA-SDT, subsequent transmission of RA-SDT, CG-SDT, and subsequent transmission of CG-SDT.

Optionally, the radio frequency unit 1101 is further configured to:
reporting capability information, where the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

Optionally, the first BWP is an initial BWP in a neighboring cell of a serving cell of the terminal.

Optionally, the second BWP is an initial BWP that is in the neighboring cell of the serving cell of the terminal and that is configured with an NCD-SSB but no CD-SSB, and the performing SDT on the second BWP based on the non-cell defining NCD-SSB includes:
the terminal performs SDT on the second BWP based on the NCD-SSB after moving from the serving cell to the neighboring cell.

Optionally, a configuration of the NCD-SSB of the neighboring cell is an NCD-SSB configuration configured for the neighboring cell via the serving cell of the terminal.

The radio frequency unit 1101 is further configured to obtain, by the terminal, the configuration of the NCD-SSB of the neighboring cell through an RRC message from the serving cell.

Optionally, the configuration of the NCD-SSB of the neighboring cell is the same as a configuration of a CD-SSB of the serving cell of the terminal.

Optionally, in a case that the terminal performs SDT on the second BWP based on the NCD-SSB, the radio frequency unit 1101 is further configured to:
obtain, by the terminal, a paging message or a system information update indication in at least one of the following manners:
receiving an RRC message sent by a network side, where the RRC message carries the paging message or the system information update indication;
monitoring a PO of any terminal; and
monitoring the paging message on the CD-SSB associated initial BWP.

In another embodiment, the radio frequency unit 1101 is configured to report capability information, where the capability information indicates at least one of the following:
supporting at least one of RA-SDT, subsequent transmission of RA-SDT, CG-SDT, and subsequent transmission of CG-SDT to be performed based on an NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

The foregoing terminal can improve transmission performance of the terminal.

It may be understood that for implementation processes of the implementations in this embodiment, refer to the relevant descriptions in the small data transmission method embodiment, with same or corresponding technical effects achieved. To avoid repetition, details are not described herein again.

An embodiment of this application further provides a network side device, including a processor and a communication interface. The communication interface is coupled to the processor. The processor is configured to run a program or instructions, to implement the steps in the method embodiment shown in FIG. 4 or 5. The network side device embodiment corresponds to the foregoing small data transmission method embodiment, and all the implementation processes and implementations in the method embodiment are applicable to the network side device embodiment, with same technical effects achieved.

An embodiment of this application further provides a network side device, including a processor and a communication interface. The communication interface is configured to perform an operation associated with small data transmission SDT. The operation includes at least one of the following: sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and receiving data on which the terminal performs SDT on a second BWP based on a non-cell defining NCD-SSB. This embodiment corresponds to the foregoing method embodiment, and all the implementation processes and implementations in the method embodiment are applicable to the terminal embodiment, with same technical effects achieved.

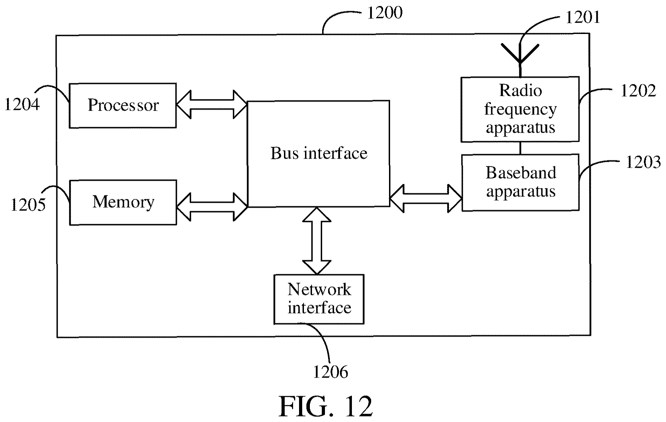

Specifically, an embodiment of this application further provides a network side device. As shown in FIG. 12, the network side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information via the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out via the antenna 1201.

The method performed by the network side device in the foregoing embodiment may be implemented in the baseband apparatus 1203, and the baseband apparatus 1203 includes a baseband processor.

The baseband apparatus 1203 may include, for example, at least one baseband board, where a plurality of chips are disposed on the baseband board. As shown in FIG. 12, one of the chips, for example, the baseband processor, is connected to the memory 1205 through a bus interface, to invoke a program in the memory 1205 to perform the operation of the network side device shown in the foregoing method embodiment.

The network side device may further include a network interface 1206. The interface is, for example, a common public radio interface (Common Public Radio Interface, CPRI).

Specifically, the network side device 1200 in this embodiment of the present invention further includes instructions or a program stored in the memory 1205 and executable on the processor 1204. The processor 1204 invokes the instructions or the program in the memory 1205 to perform the method performed by the modules shown in FIG. 8 or 9, with same technical effects achieved. To avoid repetition, details are not described herein again.

The radio frequency apparatus 1202 or the processor 1204 is configured to determine first configuration information. The first configuration information is used for configuring a time-frequency resource pattern of a perceptual signal. The time-frequency resource pattern includes at least one resource set for transmitting the perceptual signal. The resource set includes at least two time domain resource units and at least one frequency domain resource unit.

In an embodiment, the radio frequency apparatus 1202 is configured to perform an operation associated with SDT.

The operation includes at least one of the following:
sending target information to a terminal, where the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, where the first BWP is an initial BWP configured with no synchronization signal and PBCH block SSB; and
receiving data on which the terminal performs SDT on a second BWP based on a non-cell defining NCD-SSB.

Optionally, no cell defining CD-SSB and no NCD-SSB are configured on the first BWP; or
no cell defining CD-SSB is configured on the first BWP.

Optionally, the radio frequency apparatus 1202 is further configured to perform at least one of the following:
in a case that the target information is used for configuring RA-SDT for the terminal on the first BWP, receive data on which the terminal performs RA-SDT on the first BWP or a third BWP;
in a case that the target information is used for configuring CG-SDT for the terminal on the first BWP, receive data on which the terminal performs CG-SDT on the first BWP or the third BWP;
in a case that the target information is used for configuring subsequent transmission of RA-SDT for the terminal on the first BWP, receive data on which the terminal performs subsequent transmission of RA-SDT on the first BWP or the third BWP; and
in a case that the target information is used for configuring subsequent transmission of CG-SDT for the terminal on the first BWP, receive data on which the terminal performs subsequent transmission of CG-SDT on the first BWP or the third BWP.

The third BWP is a CD-SSB associated initial BWP or an NCD-SSB associated initial BWP.

Optionally, the second BWP is an initial BWP or a reduced capability RedCap dedicated initial BWP.

Optionally, a configuration of the NCD-SSB includes at least one of the following:
an NCD-SSB configuration delivered through a radio resource control RRC message;
an NCD-SSB configuration used by the terminal in a connected state; and
an NCD-SSB configuration delivered through a system message.

Optionally, the RRC message includes at least one of the following:
an RRC release message, an RRC configuration message, and an RRC reconfiguration message.

Optionally, the second BWP includes an NCD-SSB associated BWP in a target cell, or the second BWP includes an NCD-SSB associated BWP in a target area.

Optionally, the target cell includes at least one of the following:
a cell in which a target message received by the terminal is located or a cell in which a target message successfully demodulated by the terminal is located, where the target message includes an NCD-SSB configuration;
a cell in which an RRC release message received by the terminal is located or a cell in which an RRC release message successfully demodulated by the terminal is located;
a cell in which the terminal is located before the terminal enters an idle state;
a cell in which the terminal is located before the terminal enters an inactive state;
a cell in which the terminal is located in the idle state; and
a cell in which the terminal is located in the inactive state.

Optionally, the target area includes:
an area in which the target cell is located.

Optionally, the area in which the target cell is located includes at least one of the following:
an access network notification area RNA in which the target cell is located;
a public land mobile network PLMN in which the target cell is located;
a tracking area TA in which the target cell is located;
a paging area in which the target cell is located;
a distributed unit DU range in which the target cell is located; and
a central unit CU range in which the target cell is located.

Optionally, the radio frequency apparatus 1202 is further configured to:
receive capability information reported by the terminal, where the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

In another embodiment, the radio frequency apparatus 1202 is configured to receive capability information reported by a terminal, where the capability information indicates at least one of the following:
supporting at least one of RA-SDT, subsequent transmission of RA-SDT, CG-SDT, and subsequent transmission of CG-SDT to be performed based on an NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

Optionally, the another BWP includes at least one the following:
a separate initial BWP, a BWP configured with no CD-SSB, a non-initial BWP, another inter-band BWP, another intra-band BWP, another inter-frequency BWP, and another intra-frequency BWP.

The foregoing network side device can improve transmission performance of the terminal.

An embodiment of this application further provides a readable storage medium. The readable storage medium stores a program or instructions. When the program or the instructions are executed by a processor, the processes in the foregoing small data transmission method embodiment or capability information transmission method embodiment are implemented, with same technical effects achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes in the foregoing small data transmission method embodiment or capability information transmission method embodiment, with same technical effects achieved. To avoid repetition, details are not described herein again.

It should be understood that the chip in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing small data transmission method embodiment or capability information transmission method embodiment, with same technical effects achieved. To avoid repetition, details are not described herein again.

An embodiment of this application further provides a small data transmission system, including a terminal and a network side device. The terminal may be configured to perform the steps of the small data transmission method on a terminal side according to embodiments of this application. The network side device may be configured to perform the steps of the small data transmission method on a network side according to embodiments of this application.

It should be noted that in this specification, the terms "include" and "comprise" or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "including a/an..." does not preclude existence of other identical elements in the process, method, article, or apparatus that includes the element. In addition, it should be noted that the scope of the method and apparatus in the implementations of this application is not limited to performing the functions in the order shown or discussed, but may also include performing the functions in a substantially simultaneous manner or in a reverse order depending on the functions involved. For example, the described method may be performed in an order different from that described, and various steps may be added, omitted, or combined. In addition, features described with reference to some examples may be combined in other examples.

According to the descriptions of the foregoing implementations, a person skilled in the art can clearly understand that the method in the foregoing embodiments may be implemented by a computer software product in addition to a necessary universal hardware platform or by hardware only. The computer software product is stored in a storage medium (for example, a ROM, a RAM, a magnetic disk, or an optical disc), and includes several instructions for indicating a terminal or a network side device to perform the method described in embodiments of this application.

The foregoing describes embodiments of this application with reference to the accompanying drawings. However, this application is not limited to these specific implementations. The specific implementations are merely illustrative rather than restrictive. Inspired by this application, a person of ordinary skill in the art may develop many other implementations without departing from the principle of this application and the protection scope of the claims, and all such implementations fall within the protection scope of this application.

## Claims

1. A small data transmission method, comprising:
performing, by a terminal, a first operation associated with small data transmission SDT, wherein
the first operation comprises at least one of the following:
obtaining target information, wherein the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, wherein the first BWP is an initial BWP configured with no synchronization signal and PBCH block SSB; and
performing SDT on a second BWP based on a non-cell defining NCD-SSB.

2. The method according to claim 1, wherein no cell defining CD-SSB and no NCD-SSB are configured on the first BWP; or
no cell defining CD-SSB is configured on the first BWP.

3. The method according to claim 1 or 2, wherein the method further comprises at least one of the following:
in a case that the target information is used for configuring RA-SDT for the terminal on the first BWP, performing, by the terminal, RA-SDT on the first BWP or a third BWP;
in a case that the target information is used for configuring CG-SDT for the terminal on the first BWP, performing, by the terminal, CG-SDT on the first BWP or the third BWP;
in a case that the target information is used for configuring subsequent transmission of RA-SDT for the terminal on the first BWP, performing, by the terminal, subsequent transmission of RA-SDT on the first BWP or the third BWP; and
in a case that the target information is used for configuring subsequent transmission of CG-SDT for the terminal on the first BWP, performing, by the terminal, subsequent transmission of CG-SDT on the first BWP or the third BWP, wherein
the third BWP is a CD-SSB associated initial BWP or an NCD-SSB associated initial BWP.

4. The method according to claim 3, wherein the method further comprises at least one of the following:
in the case that the target information is used for configuring RA-SDT for the terminal on the first BWP, performing, by the terminal, first measurement on the third BWP, and performing resource selection for RA-SDT based on a measurement result of the first measurement;
in the case that the target information is used for configuring CG-SDT for the terminal on the first BWP, performing, by the terminal, second measurement on the third BWP, and performing resource selection for CG-SDT based on a measurement result of the second measurement;
in the case that the target information is used for configuring subsequent transmission of RA-SDT for the terminal on the first BWP, performing, by the terminal, a second operation on the third BWP, wherein the second operation comprises at least one of the following: measurement, automatic gain control AGC, and time synchronization, and subsequent transmission of RA-SDT is performed based on the second operation; and
in the case that the target information is used for configuring subsequent transmission of CG-SDT for the terminal on the first BWP, performing, by the terminal, a third operation on the third BWP, wherein the third operation comprises at least one of the following: measurement, AGC, and time synchronization, and subsequent transmission of CG-SDT is performed based on the third operation.

5. The method according to any one of claims 1 to 4, wherein the second BWP is an initial BWP or a reduced capability RedCap dedicated initial BWP.

6. The method according to any one of claims 1 to 5, wherein the performing SDT on the second BWP based on the NCD-SSB comprises:
performing RA-SDT on the second BWP, wherein a resource for performing RA-SDT is a resource selected based on a measurement result for the NCD-SSB, timing for performing RA-SDT is timing determined based on the NCD-SSB, or AGC for performing RA-SDT is AGC determined based on the NCD-SSB;
performing subsequent transmission of RA-SDT on the second BWP, wherein timing for performing subsequent transmission of RA-SDT is timing determined based on the NCD-SSB, or AGC for performing subsequent transmission of RA-SDT is AGC determined based on the NCD-SSB;
performing CG-SDT on the second BWP, wherein timing for performing CG-SDT is timing determined based on the NCD-SSB; and
performing subsequent transmission of CG-SDT on the second BWP, wherein timing for performing subsequent transmission of CG-SDT is timing determined based on the NCD-SSB, or a corresponding SSB for performing subsequent transmission of CG-SDT is an SSB determined based on the NCD-SSB.

7. The method according to any one of claims 1 to 6, wherein a configuration of the NCD-SSB comprises at least one of the following:
an NCD-SSB configuration obtained through a radio resource control RRC message;
an NCD-SSB configuration used by the terminal in a connected state; and
an NCD-SSB configuration obtained through a system message.

8. The method according to claim 7, wherein the RRC message comprises at least one of the following:
an RRC release message, an RRC configuration message, and an RRC reconfiguration message.

9. The method according to any one of claims 1 to 8, wherein the second BWP comprises an NCD-SSB associated BWP in a target cell, or the second BWP comprises an NCD-SSB associated BWP in a target area.

10. The method according to claim 9, wherein the target cell comprises at least one of the following:
a cell in which a received target message is located or a cell in which a successfully demodulated target message is located, wherein the target message comprises an NCD-SSB configuration;
a cell in which a received RRC release message is located or a cell in which a successfully demodulated RRC release message is located;
a cell in which the terminal is located before entering an idle state;
a cell in which the terminal is located before entering an inactive state;
a cell in which the terminal is located in the idle state; and
a cell in which the terminal is located in the inactive state.

11. The method according to claim 9 or 10, wherein the target area comprises:
an area in which the target cell is located.

12. The method according to claim 11, wherein the area in which the target cell is located comprises at least one of the following:
an access network notification area RNA in which the target cell is located;
a public land mobile network PLMN in which the target cell is located;
a tracking area TA in which the target cell is located;
a paging area in which the target cell is located;
a distributed unit DU range in which the target cell is located; and
a central unit CU range in which the target cell is located.

13. The method according to any one of claims 9 to 12, wherein on the second BWP, the terminal supports at least one of the following:
RA-SDT, subsequent transmission of RA-SDT, CG-SDT, and subsequent transmission of CG-SDT.

14. The method according to any one of claims 1 to 13, wherein the method further comprises:
reporting, by the terminal, capability information, wherein the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

15. The method according to claim 14, wherein the another BWP comprises at least one of the following:
a separate initial BWP, a BWP configured with no CD-SSB, a non-initial BWP, another inter-band BWP, another intra-band BWP, another inter-frequency BWP, and another intra-frequency BWP.

16. The method according to any one of claims 1 to 15, wherein the first BWP is an initial BWP in a neighboring cell of a serving cell of the terminal.

17. The method according to any one of claims 1 to 16, wherein the second BWP is an initial BWP that is in the neighboring cell of the serving cell of the terminal and that is configured with an NCD-SSB but no CD-SSB, and the performing SDT on the second BWP based on the non-cell defining NCD-SSB comprises:
performing, by the terminal, SDT on the second BWP based on the NCD-SSB after moving from the serving cell to the neighboring cell.

18. The method according to claim 17, wherein a configuration of the NCD-SSB of the neighboring cell is an NCD-SSB configuration configured for the neighboring cell via the serving cell of the terminal.

19. The method according to claim 18, wherein the terminal obtains the configuration of the NCD-SSB of the neighboring cell through an RRC message from the serving cell.

20. The method according to any one of claims 17 to 19, wherein the configuration of the NCD-SSB of the neighboring cell is the same as a configuration of a CD-SSB of the serving cell of the terminal.

21. The method according to any one of claims 1 to 20, wherein in a case that the terminal performs SDT on the second BWP based on the NCD-SSB, the method further comprises:
obtaining, by the terminal, a paging message or a system information update indication in at least one of the following manners:
receiving an RRC message sent by a network side, wherein the RRC message carries the paging message or the system information update indication;
monitoring a paging location PO of any terminal; and
monitoring the paging message on the CD-SSB associated initial BWP.

22. A small data transmission method, comprising:
performing, by a network side device, an operation associated with small data transmission SDT, wherein
the operation comprises at least one of the following:
sending target information to a terminal, wherein the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, wherein the first BWP is an initial BWP configured with no synchronization signal and PBCH block SSB; and
receiving data on which the terminal performs SDT on a second BWP based on a non-cell defining NCD-SSB.

23. The method according to claim 22, wherein the method further comprises at least one of the following:
in a case that the target information is used for configuring RA-SDT for the terminal on the first BWP, receiving data on which the terminal performs RA-SDT on the first BWP or a third BWP;
in a case that the target information is used for configuring CG-SDT for the terminal on the first BWP, receiving data on which the terminal performs CG-SDT on the first BWP or the third BWP;
in a case that the target information is used for configuring subsequent transmission of RA-SDT for the terminal on the first BWP, receiving data on which the terminal performs subsequent transmission of RA-SDT on the first BWP or the third BWP; and
in a case that the target information is used for configuring subsequent transmission of CG-SDT for the terminal on the first BWP, receiving data on which the terminal performs subsequent transmission of CG-SDT on the first BWP or the third BWP, wherein
the third BWP is a CD-SSB associated initial BWP or an NCD-SSB associated initial BWP.

24. The method according to claim 22 or 23, wherein the second BWP is an initial BWP or a reduced capability RedCap dedicated initial BWP.

25. The method according to any one of claims 22 to 24, wherein a configuration of the NCD-SSB comprises at least one of the following:
an NCD-SSB configuration delivered through a radio resource control RRC message;
an NCD-SSB configuration used by the terminal in a connected state; and
an NCD-SSB configuration delivered through a system message.

26. The method according to any one of claims 22 to 25, wherein the second BWP comprises an NCD-SSB associated BWP in a target cell, or the second BWP comprises an NCD-SSB associated BWP in a target area.

27. The method according to any one of claims 22 to 26, wherein the method further comprises:
receiving, by the network side device, capability information reported by the terminal, wherein the capability information indicates at least one of the following:
supporting at least one of RA-SDT, subsequent transmission of RA-SDT, CG-SDT, and subsequent transmission of CG-SDT to be performed based on the NCD-SSB;
supporting at least one of RA-SDT, subsequent transmission of RA-SDT, CG-SDT, and subsequent transmission of CG-SDT on an initial BWP configured with no CD-SSB;
supporting at least one of RA-SDT, subsequent transmission of RA-SDT, CG-SDT, and subsequent transmission of CG-SDT on a BWP not configured with any SSB;
a delay of switching between another BWP and the initial BWP being less than a preset value;
a delay of retuning from the another BWP back to the initial BWP being less than the preset value;
whether returning to the initial BWP is needed to perform at least one of measurement, AGC, and time synchronization in an SDT process on the another BWP; and
whether returning to the initial BWP is needed to perform at least one of measurement, AGC, and time synchronization in a random access channel RACH process on the another BWP.

28. A small data transmission apparatus, comprising:
an execution module, configured to perform a first operation associated with small data transmission SDT, wherein
the first operation comprises at least one of the following:
obtaining target information, wherein the target information is used for configuring, for a terminal on a first bandwidth part BWP, at least one of the following: random access RA-SDT, subsequent transmission of RA-SDT, configured grant CG-SDT, and subsequent transmission of CG-SDT; or the target information is used for not configuring, for a terminal on a first BWP, at least one of the following: RA-SDT, subsequent transmission of RA-SDT, CG-SDT, and subsequent transmission of CG-SDT, wherein the first BWP is an initial BWP configured with no synchronization signal and PBCH block SSB; and
performing SDT on a second BWP based on a non-cell defining NCD-SSB.

29. A small data transmission apparatus, comprising:
an execution module, configured to perform an operation associated with small data transmission SDT, wherein
the operation comprises at least one of the following:
sending target information to a terminal, wherein the target information is used for configuring, for the terminal on a first bandwidth part BWP, at least one of the following: random access RA-SDT, subsequent transmission of RA-SDT, configured grant CG-SDT, and subsequent transmission of CG-SDT; or the target information is used for not configuring, for the terminal on a first BWP, at least one of the following: RA-SDT, subsequent transmission of RA-SDT, CG-SDT, and subsequent transmission of CG-SDT, wherein the first BWP is an initial BWP configured with no synchronization signal and PBCH block SSB; and
receiving data on which the terminal performs SDT on a second BWP based on a non-cell defining NCD-SSB.

30. A terminal, comprising a processor and a memory, wherein the memory stores a program or instructions executable on the processor, and when the program or the instructions are executed by the processor, the steps of the small data transmission method according to any one of claims 1 to 21 are implemented.

31. A network side device, comprising a processor and a memory, wherein the memory stores a program or instructions executable on the processor, and when the program or the instructions are executed by the processor, the steps of the small data transmission method according to any one of claims 22 to 27 are implemented.

32. A readable storage medium, wherein the readable storage medium stores a program or instructions, and when the program or the instructions are executed by a processor, the steps of the small data transmission method according to any one of claims 1 to 21 are implemented, or when the program or the instructions are executed by a processor, the steps of the small data transmission method according to any one of claims 22 to 27 are implemented.
